# EUROPEAN PATENT APPLICATION

(11) **EP 4 029 894 A1**
(43) Date of publication of application: **20.07.2022**
(21) Application number: 21151725.5
(22) Date of filing: 15.01.2021
(51) Int. Cl.: C08G 18/73, C08G 18/75, C08G 18/42, C08G 18/28, C08G 18/34, C08G 18/38, C08G 18/18, C08G 18/32, C08G 18/12, C08G 18/48, C09D 175/12, C09J 175/12

(54) **AQUEOUS POLYURETHANE UREA DISPERSION**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to an aqueous polyurethane urea dispersion containing a polyurethane urea and a preparation process and use thereof, especially to the use in the field of coatings, adhesives or sealants, and the products obtained by coating, bonding or sealing with the polyurethane urea dispersion. The polyurethane urea of the aqueous polyurethane urea dispersion containing the polyurethane urea is obtained by the reaction of a system comprising the following components: a mixture of isocyanates, a polymer polyol, a monofunctional nonionic hydrophilic compound and a potentially anionic or anionic hydrophilic compound; said aqueous polyurethane urea dispersion has a viscosity of 5s - 18s, tested with an Anest Iwata NK-2 cup according to Standard JIS K 5600-2-2-1999-02; relative to the total weight of said aqueous polyurethane urea dispersion, the amount of said polyurethane urea is 30 wt% - 50 wt%. The aqueous polyurethane urea dispersion of the present invention has good compatibility with various organic solvents.

## Description

### Technical Field

The present invention relates to an aqueous polyurethane urea dispersion and a preparation process and use thereof, especially the use in the field of coatings, adhesives or sealants, and products obtained by coating, bonding or sealing with the polyurethane urea dispersion.

### Background technology

In the industry, in order to achieve the film-forming properties of aqueous coatings, adhesives or sealants to improve appearance or performance, a certain amount of volatile organic solvents are often added to the coatings, adhesives or sealants.

For example, CN1331707A discloses an aqueous composition, containing a polyurethane or polyurethane-polyurea dispersion, a free isocyanate ester group-containing polyisocyanate, a pigment and/or filler, optionally an auxiliary substance and additive, an oligomer or polymer, and an organic solvent.

CN101184530A discloses a hair fixative composition, containing a polyurethane with a vertical moisture vapor transmission rate greater than about 500 gms/m²/24hr, a diluent of organic solvent selected from alcohols, diols, ketones, ethers and mixtures thereof, and optionally a second hair fixing polymer.

CN1345344A discloses the use of a self-crosslinking dispersion based on a polyurethane, a polyurethane-polyurea or a polyurea in paints or coatings or as paints or coatings. Wherein the self-crosslinking dispersion is a dispersed or dissolved reaction product of the following components: a polyol component, an isocyanate component, a hydrophilic, nonionic or (potentially) ionic structural component, with isocyanate-reactive group(s), and a monofunctional blocking agent.

CN102803327A discloses the use of a composition containing an aqueous polyurethane dispersion for coating compositions, adhesives or sealants, wherein the aqueous polyurethane dispersion comprises a polyurethane prepared from the following substances containing: a polyisocyanate, a polytetramethylene glycol polyether diol, optionally a hydroxyl functional compound, optionally a nonionic hydrophilic agent and an amino functional compound.

In the aqueous coatings, adhesives or sealants, the incompatibility of organic solvents and aqueous resins may lead to the decreased stability of aqueous coatings, adhesives or sealants during storage, which is mainly manifested by large changes in viscosity, and even stratification or precipitation in severe cases, resulting in the incapability in use. In general, aqueous resins are selective to organic solvents. When a certain organic solvent is contained, the storage stability of the aqueous coating, adhesive or sealant is good, but when the organic solvent is replaced, the storage stability may decrease. The selectivity of aqueous resins to organic solvents greatly limits the flexibility of formulation design for aqueous coatings, adhesives or sealants.

Therefore, there is a hope in the industry to have an aqueous resin that has good storage stability when it is mixed with different organic solvents.

### Summary of the Invention

The object of the present invention is to provide an aqueous polyurethane urea dispersion and a preparation process and use thereof, especially to the use in the field of coatings, adhesives or sealants, and the products obtained by coating, bonding or sealing with the polyurethane urea dispersion.

According to the aqueous polyurethane urea dispersion containing the polyurethane urea of the present invention, said polyurethane urea is obtained by the reaction of a system comprising the following components:
a. at least one mixture of isocyanates, comprising hexamethylene diisocyanate and isophorone diisocyanate;
b. at least one polymer polyol;
c. 0.5 wt% - 10 wt% of a monofunctional nonionic hydrophilic compound, relative to the total weight of said polyurethane urea, comprising a compound having an isocyanate group-reactive group and at least one hydrophilic polyether chain; and
d. 0.5 wt% - 5 wt% of a potentially anionic or anionic hydrophilic compound, relative to the total weight of said polyurethane urea, comprising a carboxylate salt and/or a sulfonate salt;
said aqueous polyurethane urea dispersion has a viscosity of 5s - 18s, tested with an Anest Iwata NK-2 cup according to Standard JIS K 5600-2-2-1999-02; the amount of said polyurethane urea is 30 wt% - 50 wt%, relative to the total weight of said aqueous polyurethane urea dispersion.

According to one aspect of the present invention, there is provided a process for preparing the aqueous polyurethane urea dispersion provided according to the present invention, comprising the following steps:
i. reacting some or all of component a) a mixture of isocyanates, component b) a polymer polyol, component c) a monofunctional nonionic hydrophilic compound and component d) a potentially anionic or anionic hydrophilic compound to obtain a prepolymer;
ii. reacting said prepolymer, and the mixture of isocyanates, the polymer polyol, the monofunctional nonionic hydrophilic compound and the potentially anionic or anionic hydrophilic compound that are not added in said step i to obtain said polyurethane urea; and
iii. introducing water before, during or after step ii to obtain said aqueous polyurethane urea dispersion.

According to another aspect of the present invention, there is provided a coating, adhesive or sealant containing the aqueous polyurethane urea dispersion provided according to the present invention.

According to another aspect of the present invention, there is provided the use of the aqueous polyurethane urea dispersion provided according to the present invention in preparing a coated product or an adhered product.

According to another aspect of the present invention, there is provided an article or manufactured product comprising a substrate prepared from, coated with, bonded with or sealed with the aqueous polyurethane urea dispersion provided according to the present invention.

According to another aspect of the present invention, there is provided a coating process, comprising the following steps: applying the aqueous polyurethane urea dispersion provided according to the present invention to a surface of a substrate, and then curing.

According to another aspect of the present invention, there is provided a coated product, comprising a substrate and a coating layer formed by applying the aqueous polyurethane urea dispersion provided according to the present invention to said substrate.

According to another aspect of the present invention, there is provided an adhering process, comprising the following steps:
I. Applying the aqueous polyurethane urea dispersion provided according to the present invention to at least one surface of a substrate; and
II. Contacting the surface of the substrate treated in step I with a surface of the substrate itself or an additional base.

According to another aspect of the present invention, there is provided an adhered product obtained by manufacturing according to the adhering process provided by the present invention.

The aqueous polyurethane urea dispersion of the present invention has a good compatibility with various organic solvents. The coatings, adhesives or sealants containing the aqueous polyurethane urea dispersion of the present invention and various organic solvents have little change in viscosity and no obvious change in appearance during storage, and has a good storage stability. Moreover, the aqueous polyurethane urea dispersion of the present invention can be combined with various organic solvents, and the design flexibility of the coatings, adhesives or sealants containing the aqueous polyurethane urea dispersion of the present invention is great.

### Detailed Description of the Invention

The present invention provides an aqueous polyurethane urea dispersion containing a polyurethane urea, and said polyurethane urea is obtained by the reaction of a system comprising the following components:
a. at least one mixture of isocyanates, comprising hexamethylene diisocyanate and isophorone diisocyanate;
b. at least one polymer polyol;
c. 0.5 wt% - 10 wt% of a monofunctional nonionic hydrophilic compound, relative to the total weight of said polyurethane urea, comprising a compound having an isocyanate group-reactive group and at least one hydrophilic polyether chain; and
d. 0.5 wt% - 5 wt% of a potentially anionic or anionic hydrophilic compound, relative to the total weight of said polyurethane urea, comprising a carboxylate salt and/or a sulfonate salt;
said aqueous polyurethane urea dispersion has a viscosity of 5s - 18s, tested with an Anest Iwata NK-2 cup according to Standard JIS K 5600-2-2-1999-02; the amount of said polyurethane urea is 30 wt% - 50 wt%, relative to the total weight of said aqueous polyurethane urea dispersion. The present invention also provides the preparation process and use involving the aqueous polyurethane urea dispersion, especially the use in the field of coatings, adhesives or sealants, and a product obtained by coating, bonding or sealing with the polyurethane urea dispersion.

The term "cure" as used herein refers to a process of a liquid substance from a liquid state to a solidification state.

The term "coating" as used herein refers to a substance that can be coated on the surface of an object with a variety of application techniques to form a continuous solid coating layer having firm adhesion and certain strength.

The term "adhesive agent" as used herein refers to a chemical substance that can be coated with a variety of application techniques to a surface of an object, so as to form a coating layer on the object itself or between the surface of the object and a surface of another object, and to adhere the object itself or adhere the surface of the object to the surface of another object. This term is also used as a synonym for adhesive and/or sealant and/or binder.

The term "polyurethane urea" as used herein refers to polyurethane and/or polyurethane polyurea and/or polyurea and/or polythiourethane.

The term "aqueous polyurethane urea dispersion" as used herein refers to aqueous polyurethane dispersion and/or aqueous polyurethane polyurea dispersion and/or aqueous polyurea dispersion and/or aqueous polythiourethane dispersion.

The term "isocyanate group-reactive" as used herein refers to a group containing a Zerevitinov-active hydrogen, and the Zerevitinov-active hydrogen is defined with reference to Rompp's Chemical Dictionary (Rommp Chemie Lexikon), 10th ed., Georg Thieme Verlag Stuttgart, 1996. Generally, the group containing a Zerevitinov-active hydrogen is understood in the art to refer to hydroxyl group (OH), amino groups (NHₓ) and thiol group (SH).

Herein, the content of the polyurethane urea in said aqueous polyurethane urea dispersion is identical to the content of the solid component of said aqueous polyurethane urea dispersion.

The term "hydrophilic" as used herein refers to having a polar group, having an affinity for water, and being capable of forming hydrogen bonds with water.

### Aqueous polyurethane urea dispersion

Said aqueous polyurethane urea dispersion has a viscosity of preferably 8s-14s, tested with an Anest Iwata NK-2 cup according to Standard JIS K 5600-2-2-1999-02.

The content of the urea group of said polyurethane urea is preferably greater than 0.8 eq/kg, relative to the total weight of said polyurethane urea. The computation method for the content of the urea group of said polyurethane urea relative to the total weight of said polyurethane urea: the equivalent weight of the urea group of the polyurethane urea/the total weight of the polyurethane urea.

The soft segment content of said polyurethane urea is preferably less than 80%, relative to the total weight of said polyurethane urea. The computation method for the soft segment content of said polyurethane urea relative to the total weight of said polyurethane urea: (the soft segment weight of the polyurethane urea/the total weight of the polyurethane urea)*100.

The melting enthalpy in the range of 20°C-100°C of the first temperature-rise curve measured by DSC according to DIN65467 of said polyurethane urea is preferably less than 3 J/g.

The weight-average molecular weight of said polyurethane urea is preferably less than 150000. The weight-average molecular weight is measured at 40°C by using an organic solvent as mobile phase and a polystyrene standard sample as control with the gel permeation chromatography. The organic solvent generally used as the mobile phase is tetrahydrofuran, chloroform, N-methyl formamide or N-ethyl formamide.

The content of said polyurethane urea is most preferably 30 wt% - 40 wt%, relative to the total weight of said aqueous polyurethane urea dispersion.

### Component a) a mixture of isocyanates

The molar ratio of hexamethylene diisocyanate to isophorone diisocyanate is preferably 0.1:1 - 11:1, most preferably 0.2:1 - 9:1.

The amount of the mixture of isocyanates as the component a) is preferably 10 wt% - 70 wt%, most preferably 10 wt% - 25 wt%, relative to the total weight of said polyurethane urea.

The mixture of isocyanates as the component a) can further contain an additional isocyanate. The amount of the additional isocyanate is preferably not more than 50 wt%, relative to the total weight of the mixture of isocyanates.

The functionality of the additional isocyanate is preferably not less than 2, most preferably 2-4.

The additional isocyanate is preferably one or more of the following: aliphatic polyisocyanates, alicyclic polyisocyanates, aromatic polyisocyanates, and derivatives thereof having iminooxadiazinedione, isocyanurate, uretdione, urethane, allophanate, biuret, urea, oxadiazinetrione, oxazolidinone, acylurea and/or carbodiimide groups.

Said aliphatic polyisocyanate is preferably one or more of the following: 1,6-hexamethylene diisocyanate, 1,5-pentamethylene diisocyanate, 2,2-dimethylpentamethylene diisocyanate, 2,2,4-trimethylhexamethylene diisocyanate, butylene diisocyanate, 1,3-butadiene-1,4-diisocyanate, 2,4,4-trimethyl-1,6-hexamethylene diisocyanate, 1,6,11-undecane triisocyanate, 1,3,6-hexamethylene triisocyanate, 1,8-diisocyanato-4-isocyanatomethyl octane, bis(isocyanatoethyl) carbonate, bis(isocyanatoethyl) ether, lysine methyl ester diisocyanate, lysine triisocyanate, bis(isocyanatomethyl)thioether, bis(isocyanatoethyl)thioether, bis(isocyanatopropyl)thioether, bis(isocyanatohexyl)thioether, bis(isocyanatomethyl)sulfone, bis(isocyanatomethyl)dithioether, bis(isocyanatoethyl)dithioether, bis(isocyanatopropyl)dithioether, bis(isocyanatomethylthio)methane, bis(isocyanatoethylthio)methane, bis(isocyanatomethylthio)ethane, bis(isocyanatoethylthio)ethane, 1,5-diisocyanato-2-isocyanatomethyl-3-thia-pentane, 1,2,3-tris(isocyanatomethylthio)propane, 1,2,3-tris(isocyanatoethylthio)propane, 3,5-dithia-1,2,6,7-heptane tetraisocyanate, 2,6-diisocyanatomethyl-3,5-dithia-1,7-heptane diisocyanate, 2,5-diisocyanatomethylthiophene, isocyanatoethylthio-2,6-dithia-1,8-octane diisocyanate, thiobis(3-isothiocyanatopropane), thiobis(2-isothiocyanatoethane) and dithiobis(2-isothiocyanatoethane).

Said alicyclic polyisocyanate is preferably one or more of the following: 2,5-bis(isocyanatomethyl)-bicyclo[2.2.1]heptane, 2,6-bis(isocyanatomethyl)-bicyclo[2.2.1]heptane, bis(isocyanatomethyl)cyclohexane, isophorone diisocyanate, 4,4'-dicyclohexylmethane diisocyanate, 2,5-diisocyanatotetrahydrothiophene, 2,5-diisocyanatomethyltetrahydrothiophene, 3,4-diisocyanatomethyl tetrahydrothiophene, 2,5-diisocyanato-1,4-dithiane, 2,5-diisocyanatomethyl-1,4-dithiane, 4,5-diisocyanato-1,3-dithiolane, 4,5-bis(isocyanatomethyl)-1,3-dithiolane, 4,5-diisocyanatomethyl-2-methyl-1,3-dithiolane, norbornane diisocyanate (NBDI), xylylene diisocyanate (XDI), hydrogenated xylylene diisocyanate (H₆XDI), 1,4-cyclohexyl diisocyanate (H₆PPDI), meta-tetramethylxylylene diisocyanate (m-TMXDI) and cyclohexane diisothiocyanate, most preferably one or more of the following: isophorone diisocyanate and 4,4'-dicyclohexylmethane diisocyanate.

Said aromatic polyisocyanate is preferably one or more of the following: 1,2-diisocyanatobenzene, 1,3-diisocyanatobenzene, 1,4-diisocyanatobenzene, 2,4-diisocyanatotoluene, ethylbenzene diisocyanate, isopropylbenzene diisocyanate, toluene diisocyanate, diethylbenzene diisocyanate, diisopropylbenzene diisocyanate, trimethylbenzene triisocyanate, benzene triisocyanate, biphenyl diisocyanate, toluidine diisocyanate, 4,4'-methylene bis(phenylisocyanate), 4,4'-methylene bis(2-methylphenylisocyanate), bibenzyl-4,4'-diisocyanate, bis(isocyanatophenyl)ethylene, bis(isocyanatomethyl)benzene, bis(isocyanatoethyl)benzene, bis(isocyanatopropyl)benzene, α,α,α',α'-tetramethylxylylene diisocyanate, bis(isocyanatobutyl)benzene, bis(isocyanatomethyl)naphthalene, bis(isocyanatomethyl phenyl)ether, bis(isocyanatoethyl)phthalate, 2,6-di(isocyanatomethyl)furan, 2-isocyanatophenyl-4-isocyanatophenyl sulfide, bis(4-isocyanatophenyl)sulfide, bis(4-isocyanatomethyl phenyl)sulfide, bis(4-isocyanatophenyl)disulfide, bis(2-methyl-5-isocyanatophenyl)disulfide, bis(3-methyl-5-isocyanatophenyl)disulfide, bis(3-methyl-6-isocyanatophenyl)disulfide, bis(4-methyl-5-isocyanatophenyl)disulfide, bis(4-methoxy-3-isocyanatophenyl)disulfide, 1,2-diisothiocyanato benzene, 1,3-diisothiocyanato benzene, 1,4-diisothiocyanato benzene, 2,4-diisothiocyanato toluene, 2,5-diisothiocyanato-meta-xylene, 4,4'-methylene bis(phenylisothiocyanate), 4,4'-methylene bis(2-methylphenylisothiocyanate), 4,4'-methylene bis(3-methylphenylisothiocyanate), 4,4'-diisothiocyanatobenzophenone, 4,4'-diisothiocyanato-3,3'-dimethylbenzophenone, bis(4-isothiocyanatophenyl)ether, 1-isothiocyanato-4-[(2-isothiocyanato)sulfonyl]benzene, thiobis(4-isothiocyanatobenzene), sulfonyl(4-isothiocyanatobenzene), hydrogenated toluene diisocyanate (H₆TDI), diphenylmethane diisocyanate and dithiobis(4-isothiocyanatobenzene), most preferably one or more of the following: 1,2-diisocyanatobenzene, 1,3-diisocyanatobenzene, 1,4-diisocyanatobenzene, diphenylmethane diisocyanate and 2,4-diisocyanatotoluene.

The additional isocyanate may also have isocyanato and isothiocyanato, for example 1-isocyanato-6-isothiocyanatohexane, 1-isocyanato-4-isothiocyanatocyclohexane, 1-isocyanato-4-isothiocyanatobenzene, 4-methyl-3-isocyanato-1-isothiocyanatobenzene, 2-isocyanato-4,6-diisothiocyanato-1,3,5-triazine, 4-isocyanatophenyl-4-isothiocyanatophenylsulfide and 2-isocyanatoethyl-2-isothiocyanatoethyldisulfide.

The additional isocyanate may also be a halogen substitute such as a chlorine substitute, a bromine substitute, an alkyl substitute, an alkoxy substitute, a nitro substitute or a silane substitute of the above polyisocyanates, for example, isocyanatopropyltriethoxysilane or isocyanatopropyltrimethoxysilane.

### Component b) a polymer polyol

Said polymer polyol is preferably one or more of the following: polyether polyol, polyester polyol, polycarbonate polyol, polylactone polyol and polyamide polyol, most preferably polyester polyol.

Said polyester polyol is preferably one or more of the following: linear polyester diol, lightly branched polyester polyol, lactone-type homopolymer and lactone-type copolymer.

Said linear polyester diol and said lightly branched polyester polyol are preferably prepared by inclusion of the following components: aliphatic, alicyclic or aromatic di- or poly-carboxylic acids, for example succinic acid, methyl succinic acid, glutaric acid, adipic acid, pimelic acid, suberic acid, azelaic acid, sebacic acid, nonane dicarboxylic acid, decane dicarboxylic acid, terephthalic acid, isophthalic acid, phthalic acid, tetrahydrophthalic acid, hexahydrophthalic acid, cyclohexane dicarboxylic acid, maleic acid, fumaric acid, malonic acid or trimellitic acid; acid anhydride, for example phthalic anhydride, trimellitic anhydride or succinic anhydride or a mixture thereof; low molecular weight polyol, for example ethylene glycol, di-, tri-, tetra-ethylene glycol, 1,2-propylene glycol, di-, tri-, tetra-propylene glycol, 1,3-propylene glycol, 1,4-butylene glycol, 1,3-butylene glycol, 2,3-butylene glycol, 1,5-pentylene glycol, 1,6-hexylene glycol, 2,2-dimethyl-1,3-propylene glycol, 1,4-dihydroxyl cyclohexane, 1,4-dimethylol cyclohexane, 1,8-octanediol, 1,10-decanediol, 1,12-dodecane diol or mixtures thereof; and optionally by using a higher functional polyol, for example trimethylolpropane, glycerol or pentaerythritol, an alicyclic and/or aromatic di- and polyhydroxyl compound.

Said lactone-type homopolymer and said lactone-type copolymer are preferably obtained by adding a lactone or a lactone mixture such as butyrolactone, ε-caprolactone and/or methyl-ε-caprolactone to an appropriate di- and/or higher-functional starter molecule (for example the above-mentioned low molecular weight polyol as the chain extending component of the polyester polyol). Said ε-caprolactone is preferably a polymer of ε-caprolactone.

Said polyester polyol is most preferably one or more of the following: a polyester diol from adipic acid, neopentyl glycol and 1,6-hexandiol and 1,4-butylene glycol polyadipate diol.

Said polyester polyol has a number-average molecular weight of preferably 1000 g/mol - 3000 g/mol.

Said polycarbonate polyol is preferably a hydroxy-containing polycarbonate polyol, for example, it can be prepared by the reaction of a diol and a diaryl carbonate and/or a dialkyl carbonate and phosgene. Said diol is preferably one or more of the following: 1,4-butylene glycol and 1,6-hexylene glycol; said diaryl carbonate is preferably diphenyl carbonate; said dialkyl carbonate is preferably dimethyl carbonate.

Said polycarbonate polyol is most preferably obtained by the reaction of 1,6-hexylene glycol and dimethyl carbonate.

Said polyether polyol is preferably one or more of the following: the polyaddition products of styrene oxide, ethylene oxide, propylene oxide, tetrahydrofuran, epoxy butane, and epichlorohydrin and mixed addition and graft products thereof, the condensation products of polyols or mixtures thereof and the alkoxylation products of polyols, amines and amino alcohols.

Said polyether polyol is most preferably one or more of the following: a homopolymer of propylene oxide and ethylene oxide, a mixed polymer of propylene oxide and ethylene oxide and a graft polymer of propylene oxide and ethylene oxide.

The amount of said polymer polyol is preferably 20 wt% - 85 wt%, most preferably 60 wt% - 80 wt%, relative to the total weight of said polyurethane urea.

### Component c) a monofunctional nonionic hydrophilic compound

The amount of said monofunctional nonionic hydrophilic compound is preferably 1 wt% - 9 wt%, relative to the total weight of said polyurethane urea.

Said monofunctional nonionic hydrophilic compound is preferably one or more of the following: polyethylene oxide monoalkyl ether and polyethylene oxide polypropylene oxide copolymer monoalkyl ether; most preferably one or more of the following: polyethylene oxide monomethyl ether and polyethylene oxide polypropylene oxide copolymer monomethyl ether.

Said monofunctional nonionic hydrophilic compound has a number-average molecular weight of preferably 800 g/mol - 3000 g/mol, and a hydroxyl value of preferably 18.7 mgKOH/g - 70.1 mgKOH/g.

The amount of the monofunctional nonionic hydrophilic compound relative to the total weight of said polyurethane urea according to the present invention is the amount of the monofunctional nonionic hydrophilic compound relative to the total weight of the solid component of said aqueous polyurethane urea dispersion.

### Component d) a potentially anionic or anionic hydrophilic compound

The amount of said potentially anionic or anionic hydrophilic compound is preferably 0.5 wt% - 4.5 wt%, relative to the total weight of said polyurethane urea.

Said potentially anionic or anionic hydrophilic compound is preferably one or more of the following: 2,2-dimethylolpropionic acid, 2,2-dimethylolpropionate, 2,2-dimethylolbutyric acid, 2,2-dimethylolbutyrate, sulfamic acid, sulfamate, aminocarboxylic acid and aminocarboxylate; most preferably one or more of the following: 2,2-dimethylolpropionic acid, lysine and sodium disulfamate.

The amount of the potentially anionic or anionic hydrophilic compound relative to the total weight of said polyurethane urea according to the present invention is the amount of the potentially anionic or anionic hydrophilic compound relative to the total weight of the solid component of said aqueous polyurethane urea dispersion. Wherein, the amount of the potentially anionic hydrophilic compound relative to the total weight of said polyurethane urea = (the weight of the potentially anionic hydrophilic compound ^{∗} the neutralization degree/the weight of said polyurethane urea) ^{∗} 100%, the neutralization degree = moles of the neutralizer in the system/moles of the carboxyl group in the system.

### Component e) an isocyanate group-reactive compound other than component b) - component d)

Said system preferably further contains a component e) an isocyanate group-reactive compound other than component b) - component d), having a molecular weight of 50 g/mol - 400 g/mol.

Said component e) the isocyanate group-reactive compound other than component b) - component d) is preferably one or more of the following: an alcohol compound having the functionality of 1-2 and a hydroxy-free amine compound having the functionality of 1-2; further preferably one or more of the following: an alcohol compound having the functionality of 1-2 and the molecular weight of less than 400 g/mol and a hydroxy-free amine compound having the functionality of 1-2 and the molecular weight of less than 400 g/mol; most preferably one or more of the following: isophorone diamine and ethylene diamine.

The amount of said component e) the isocyanate group-reactive compound other than component b) - component d) is preferably 0-20 wt%, further preferably 0-5 wt%, most preferably 0.5 wt% - 4.5 wt%, relative to the total weight of said polyurethane urea.

The amount of the substance having more than two isocyanate group-reactive groups in said component e) the isocyanate group-reactive compound other than component b) - component d) is preferably not more than 0.5 wt%, most preferably free of the substance having more than two isocyanate group-reactive groups.

### System

The mole ratio of the isocyanate group to the hydroxy group of said system is preferably 1.3 - 3.0, most preferably 1.7 - 2.8.

Said system can further contain one or more of the following: external emulsifier, solvent, reactive diluent, neutralizer and stabilizer.

The amount of said external emulsifier is preferably 0.001 wt% - 10 wt%, relative to the total weight of the system.

Said external emulsifier is preferably aliphatic alcohol polyether, most preferably one or more of the following: aliphatic ethylene glycol polyether and aliphatic propylene glycol polyether.

Said solvent is preferably one or more of the following: acetone, 2-butanone, tetrahydrofuran, xylene, toluene, cyclohexane, butyl acetate, 1,4-dioxane, methoxypropyl acetate, N-methylpyrrolidone, N-ethylpyrrolidone, acetonitrile, dipropylene glycol dimethyl ether and a solvent containing an ether or ester unit, most preferably one or more of the following: acetone and 2-butanone.

The amount of said solvent is preferably 0.001 wt% - 20 wt%, relative to the total weight of the system. Said solvent may be added only at the beginning of the preparation, or a part of said solvent may be added during the preparation as needed.

Said reactive diluent is preferably one or more of the following: acrylic acid and acrylate, most preferably methacrylate.

The amount of said reactive diluent is preferably 0.001 wt% - 70 wt%, relative to the total weight of the system.

Said stabilizer is preferably one or more of the following: carbodiimide-tpye compound, epoxy group-tpye compound, oxazoline-type compound and aziridine-type compound.

The content of said stabilizer is preferably 0 - 10 wt%, further preferably 0.5 wt% - 10 wt%, most preferably 0.5 - 2 wt%, relative to the total weight of the system.

Said neutralizer is preferably DMEA.

### The process for preparing the aqueous polyurethane urea dispersion

Said aqueous polyurethane urea dispersion can be prepared in a homogeneous system through one or more steps, or in the case of a multi-step reaction, partly in a dispersion phase. When the reaction of step ii is complete or partially complete, a step of dispersing, emulsifying or dissolving is performed. Then optionally the polyaddition or modification is further performed in the dispersion phase.

The process for preparing the aqueous polyurethane urea dispersion provided according to the present invention can comprise the following steps:
i. reacting some or all of component a) a mixture of isocyanates, component b) a polymer polyol, component c) a monofunctional nonionic hydrophilic compound, component d) a potentially anionic or anionic hydrophilic compound and optionally component e) an isocyanate group-reactive compound to obtain a prepolymer, wherein the reaction is optionally carried out in presence of a water-miscible solvent but inert to isocyanate groups, or after the reaction, optionally a water-miscible solvent but inert to isocyanate groups is added to dissolve the prepolymer;
ii. reacting said prepolymer, component a) a mixture of isocyanates, component b) a polymer polyol, component c) a monofunctional nonionic hydrophilic compound, component d) a potentially anionic or anionic hydrophilic compound, optionally component e) an isocyanate group-reactive compound that are not added in said step i), optionally an external emulsifier, optionally an organic solvent, optionally a reactive diluent, optionally a stabilizer and optionally a neutralizer to obtain said polyurethane urea; and
iii. introducing water and optionally an emulsifier before, during or after step ii to obtain said aqueous polyurethane urea dispersion.

Said water-miscible solvent but inert to isocyanate groups is preferably one or more of the following: acetone, butanone, tetrahydrofuran, acetonitrile, dipropylene glycol dimethylether and 1-methyl-2-pyrrolidone, most preferably one or more of the following: acetone and butanone.

The reaction in said water-miscible solvent but inert to isocyanate groups can be carried out under a normal pressure or a reduced pressure.

All processes known in the prior art can be used to prepare the aqueous polyurethane urea dispersion of the present invention, for example, emulsifier/shearing force process, acetone process, prepolymer mixing process, melting emulsion process, ketoimine process and solid spontaneous dispersion process or the derivative processes thereof and the like, preferably melting emulsion process or acetone process, most preferably acetone process. These processes are summarized in Methoden der organischen Chemie (Houben-Weyl, Erweitenmgs-und zur 4.Auflage, Volume E20, H Bartl and J.Falbe, Stuttgart, New York, Thieme 1987, p. 1671-1682).

Said acetone process is preferably carried out in the absence of a water-miscible solvent but inert to isocyanate groups, but in a condition of being heated to a higher temperature, preferably 50°C-120°C.

In order to accelerate the reaction rate of step i, the catalysts conventionally used in the preparation of prepolymers, for example triethylamine, 1,4-diazabicyclo-[2,2,2]-octane, tin dioctoate or dibutyltin dilaurate, most preferably dibutyltin dilaurate, can be used.

The catalyst can be added to the reactor simultaneously with the components of step i, or can be added later.

The conversion degree of the components in said step i can be obtained by testing the NCO content in the components. For this purpose, spectral measurements, for example infrared or near-infrared spectrum, and refractive index determination or chemical analysis, for example titration, can be carried out simultaneously on the withdrawn sample.

Said prepolymer may be in a solid state or in a liquid state at room temperature.

The neutralization degree of said prepolymer may be 50 mol% - 125 mol%, preferably 70 mol% - 100 mol%.

The equivalent ratio of the isocyanate-reactive groups of the compound for chain extension in said step ii to the free isocyanate groups (NCO) of the prepolymer may be 40 mol% - 100 mol%, preferably 50 mol% - 100 mol%.

The components of said step ii can be optionally used individually or in admixture in the form of being diluted with water or being diluted with a solvent, and the addition sequence can be of any sequence. The water or solvent content is preferably 70 wt% - 95 wt%, relative to the total weight of said aqueous polyurethane dispersion.

A strong shear such as an intense agitation can be used in said step iii.

The solvent present in the aqueous polyurethane urea dispersion can be removed by distillation. Said solvent can be removed during step ii or step iii.

The amount of the residual solvent in said aqueous polyurethane urea dispersion is preferably lower than 1.0 wt%, relative to the total weight of said aqueous polyurethane urea dispersion.

### Coatings, adhesives or sealants

Said aqueous polyurethane urea dispersion can be used alone or together with an organic solvent known in coating, adhesive or sealant technology.

Said organic solvent has a flash point of preferably 0°C - 280°C and a boiling point of preferably 20°C - 500°C.

Said organic solvent is preferably one or more of the following: an alcohol compound, an ether compound, a ketone compound, an ester compound and a hydrocarbon compound.

Said organic solvent is further preferably one or more of the following: an alcohol compound, an ether compound and an ester compound, more preferably one or more of the following: an alcohol compound, an alcohol ether compound and an alcohol ether acetic acid compound, further more preferably one or more of the following: isooctyl alcohol, 1,2-propylene glycol, ethylene glycol butyl ether, diethylene glycol butylether, propylene glycol methyl ether, dipropylene glycol methyl ether, dipropylene glycol dimethyl ether, dipropylene glycol butylether, propylene glycol methyl ether acetate and propylene-glycol diacetate, most preferably one or more of the following: isooctyl alcohol, ethylene glycol butyl ether, diethylene glycol butylether and dipropylene glycol butylether.

The coating, adhesive or sealant preferably further contains an additive. Said additive is preferably one or more of the following: co-adhesive, lubricant, emulsifier, light stabilizer, antioxidant, filler, antisettling agent, defoamer, humectant, flow control agent, antistatic agent, film formation auxiliary, reactive diluent, plasticizer, neutralizer, catalyst, thickener, pigment, dye, tackifier and matting agent.

The selection and the use dosage of the additives are in principle known to those of ordinary skill in the art and can be easily determined.

Said light stabilizer may be a UV absorber and / or a steric hindered amine.

The aqueous polyurethane urea dispersion of the present invention can also be mixed with and used together with other aqueous or solvent-containing oligomers or polymers, for example aqueous or solvent-containing polyester, polyurethane, polyurethane-polyacrylate, polyacrylate, polyether, polyester-polyacrylate, alkyd resin, addition polymer, polyamide/imide or polyepoxide. A simple preliminary test must be used in each case to test the compatibility of this kind of mixture.

The aqueous polyurethane urea dispersion of the present invention can also be mixed with and used together with other compounds containing a functional group such as carboxyl, hydroxy and/or blocked isocyanate group.

The coating, adhesive or sealant of the present invention is obtained by the treatment according to the process known to those skilled in the art.

The viscosity change value after stored at room temperature for 1 hour of the coating, adhesive or sealant is preferably less than 25%, and most preferably less than 20%.

The viscosity change value after stored at room temperature for 1 day of the coating, adhesive or sealant is preferably less than 25%.

The viscosity change value after stored in a 40°C oven for 3 days of the coating, adhesive or sealant is preferably less than 25%.

### Coating method, coated product

Said substrate is preferably one or more of the following: wood, metal, glass, fibre, textile, artificial leather, leather, paper, plastic, rubber, foam and various polymer coating layers, most preferably one or more of the following: wood, metal, rubber, leather, artificial leather and various polymer coating layers.

Said application can be the application of said coating or said adhesive agent to the entire surface of the substrate or only to one or more parts of the surface of the substrate.

The application can be brush coating, impregnation, spraying, roller coating, knife coating, flow coating, casting, printing or transfer printing, preferably brush coating, impregnation or spraying.

### Adhering process, adhered product

Said process preferably further comprises step III between step I and step II: heating and drying the surface of the substrate on which the aqueous polyurethane urea dispersion is applied.

Said process preferably further comprises step IV between step III and step II: irradiating the surface of the substrate treated in step III with actinic radiation.

Said substrate is preferably one or more of the following: wood, plastic, metal, glass, textile, alloy, fabric, artificial leather, paper, cardboard, EVA, rubber, leather, glass fiber, ethylene vinyl acetate copolymer, polyolefine, thermoplastic polyurethane, polyurethane foam, polymer fibre and graphite fibre, most preferably one or more of the following: EVA, rubber, leather, artificial leather, ethylene vinyl acetate copolymer, polyolefine, thermoplastic polyurethane and polyurethane foam.

Said application can be the application of said aqueous polyurethane urea dispersion to the entire surface of the substrate or only to one or more parts of the surface of the substrate.

The application can be brush coating, impregnation, spraying, roller coating, knife coating, flow coating, casting, printing or transfer printing, preferably brush coating, impregnation or spraying.

Said heating and drying the surface of the substrate on which the adhesive agent is applied, can refer to only heating and drying the surface of the substrate, and can also refer to heating and drying a part of the substrate or the whole substrate including the surface of the substrate on which the adhesive agent is applied.

Said heating and drying can remove the volatile components. Said volatile component may be water.

Said heating and drying is preferably one or more of the following: infrared thermal radiation, near infrared thermal radiation, microwave and using a convection furnace or a spray dryer under the condition of the elevated temperature.

### Examples

Unless defined otherwise, all technical and scientific terms used herein have the same meanings as commonly understood by those skilled in the art to which this invention belongs. To the extent that the definitions of terms used in this specification conflict with meanings commonly understood by those skilled in the art to which this invention belongs, the definitions set forth herein prevail.

Unless otherwise indicated, all numbers expressing quantities of ingredients, reaction conditions, and the like used in the specification and claims are to be understood as being modified by the term "about". Accordingly, unless indicated to the contrary, the numerical parameters set forth herein are approximations that can vary depending upon the desired properties to be obtained.

As used herein, "and/or" refers to one or all of the mentioned elements.

The use of "comprise" and "contain" herein encompasses the presence of the mentioned elements alone and the presence of other elements not mentioned in addition to the mentioned elements.

All percentages in the present invention are by weight unless otherwise stated.

The analyses and measurements of the present invention are all carried out at 23±2°C, unless otherwise stated.

The solid component content of the aqueous polyurethane urea dispersion is measured according to DIN-EN ISO 3251 with the HS153 moisture meter available from Mettler Toledo Inc.

Isocyanate group (NCO) content is measured according to DIN-EN ISO 11909, and the measurement data include the free and potential free NCO contents.

The number-average molecular weight is measured at 40°C by using tetrahydrofuran as mobile phase and a polystyrene standard sample as control with the gel permeation chromatography.

### Raw materials and reagents

Polyester I: a polyester diol from 1,6-hexandiol, neopentyl glycol and adipic acid, having an OH value of 66 and a number-average molecular weight of 1691 g/mol, commercially available from Covestro AG, Germany.
Polyester II: 1,4-butanediol polyadipate diol, having an OH value of 50, the melting temperature of 49°C, the melting enthalpy of 91.0 J/g, and the number-average molecular weight of 2323 g/mol, commercially available from Covestro AG, Germany.
Desmodur^{®} H: 1,6-hexamethylene diisocyanate, commercially available from Covestro AG, Germany.
Desmodur^{®} I: isophorone diisocyanate, commercially available from Covestro AG, Germany.
LB25: a polyoxyalkylene monoether alcohol, a monofunctional nonionic hydrophilic compound, an ethylene oxide/propylene oxide-based monofunctional polyether polyol, having the number-average molecular weight of 2250 g/mol, and the hydroxyl value of 25 mg KOH/g, commercially available from Covestro AG, Germany.
DMPA: a potentially anionic hydrophilic compound, 2,2-dimethylolpropionic acid, commercially available from Aldrich Chemical Co., Inc.
TEA: triethylamine.
IPDA: isophorone diamine.
EDA: ethylene diamine.
   L-lysine: 50% aqueous L-lysine solution, commercially available from Xiamen Feihe Chemical Co., Ltd.
DMEA: dimethylethanolamine, commercially available from Sinopharm Chemical Reagent Co. Ltd.
PTHF2000: a polytetrahydrofuran polyol, having the functionality of 2, the number-average molecular weight of 2000 g/mol, and the hydroxyl value of 56 mg KOH/g, commercially available from Germany BASF Co., Ltd.
PTHF1000: a polytetrahydrofuran polyol, having the functionality of 2, the number-average molecular weight of 1000 g/mol, and the hydroxyl value of 112 mg KOH/g, commercially available from Germany BASF Co., Ltd.
MPEG1000: a polyethylene oxide, having the functionality of 1, the number-average molecular weight of 1000 g/mol, and the hydroxyl value of 112 mg KOH/g, commercially available from Shanghai Dongda Chemical Co. Ltd.
AAS: Sodium disulfamate NH₂-CH₂CH₂-NH-CH₂CH₂-SO₃Na, having a concentration of 45% in water.
Desmophen^{®} C1200: a polycarbonate polyol, having the functionality of 2, the number-average molecular weight of 2000 g/mol, and the hydroxyl value of 56 mg KOH/g, commercially available from Covestro AG, Germany.
Bayhydrol^{®} UH 2648/1: a polyurethane dispersion, commercially available from Covestro Ltd.
BYK190: a dispersant, having a concentration of 40% and commercially available from BYK-Chemie GmbH.
BYK 192: a dispersant, commercially available from BYK-Chemie GmbH.
EnviroGem AD 01: a defoamer, having a concentration of 100% and commercially available from Evonik.
Surfinol 104 BC: a wetting agent, having a concentration of 50%, commercially available from Evonik.
BYK 028: a defoamer, commercially available from BYK-Chemie GmbH.
BYK 348: a wetting agent, commercially available from BYK-Chemie GmbH.
R-706: a titanium white powder, commercially available from Chemours Chemicals (Shanghai) Co., Ltd.
Talc: a talcum powder, 1250 mesh, commercially available from Shanghai Yuejiang Chemical.
Colour black FW200: a carbon black, commercially available from Evonik.
Rm-8w: a rheologic auxiliary, commercially available from Dow Chemical.
Primal ASE 60: a thickener, commercially available from Dow Chemical.
RD: a rheologic auxiliary, commercially available from BYK-Chemie GmbH.
AQUATIX 8421: a rheologic auxiliary, commercially available from BYK-Chemie GmbH.
Rheolate 299: a thickener, commercially available from Elementis Specialities.
Cytec 325: a resin, commercially available from Allnex Resin.
Hydrolan 2154: an aluminium powder, commercially available from Eckart.
BG: ethylene glycol butyl ether, an organic cosolvent, commercially available from Macklin.
BDG: diethylene glycol butylether, an organic cosolvent, commercially available from Shanghai Lingfeng Chemical Reagent Co., Ltd.
2-EHA: isooctyl alcohol, an organic cosolvent, commercially available from Shanghai Lingfeng Chemical Reagent Co., Ltd.
DPnB: dipropylene glycol butyl ether, an organic cosolvent, commercially available from Macklin.
6-aminocaproic acid: commercially available from Sinopharm Chemical Reagent Co. Ltd.

### Preparation of the aqueous polyurethane urea dispersion

### Aqueous polyurethane urea dispersion 1

234.2g of polyester I and 29.7g of LB25 were dehydrated at 110°C under 15 mbar for 1 hour and then 2.0g of 2,2-dimethylolpropionic acid was added. The mixture was cooled while stirring. 11.2g of Desmodur^{®} H and 74.0g of Desmodur^{®} I were added at 60°C, and the mixture was stirred at 80°C-90°C until the isocyanate content reached 5.7%. The mixture was then dissolved in 572g of acetone and cooled to 50°C to obtain a reaction solution. 1.5g of TEA was added to the reaction solution and the mixture was stirred for 5 minutes. Then a solution of 13.8g of IPDA and 2.7g of EDA in 49.3g of water was added, after vigorously agitating for 30 minutes, the mixture was dispersed by adding 800g of water, and then distillated to separate acetone off and obtain the aqueous polyurethane urea dispersion 1 having a solid component content of 30 wt% and a viscosity of 8.4 seconds.

### Aqueous polyurethane urea dispersion 2

234.2g of polyester I and 3.3g of LB25 were dehydrated at 110°C under 15 mbar for 1 hour and then the mixture was cooled. 38.2g of Desmodur^{®} H and 5.6g of Desmodur^{®} I were added at 60°C, and the mixture was stirred at 80°C-90°C until the isocyanate content reached 3.4%. The mixture was then dissolved in 460g of acetone and cooled to 50°C to obtain a reaction solution. A solution of 7.9g of DMEA, 20.1g of L-lysine and 3.9g of 6-aminocaproic acid in 31.8g of water was added to the reaction solution and the mixture was vigorously agitated for 30 minutes. The mixture was dispersed by adding 520g of water and then distillated to separate acetone off and obtain the aqueous polyurethane urea dispersion 2 having a solid component content of 35 wt% and a viscosity of 10.4 seconds.

### Aqueous polyurethane urea dispersion 3

183.7g of PTHF2000, 91.9g of PTHF1000 and 3.8g of MPEG1000 were dehydrated at 110°C under 15 mbar for 1 hour and then the mixture was cooled. 32.8g of Desmodur^{®} H and 43.3g of Desmodur^{®} I were added at 60°C, and the mixture was stirred at 80°C-90°C until the isocyanate content reached 4.8%. The mixture was then dissolved in 580g of acetone and cooled to 50°C to obtain a reaction solution. A solution of 16.7g of AAS, 7.7g of IPDA and 1.8g of EDA in 28.3g of water was added to the reaction solution and the mixture was vigorously agitated for 30 minutes. The mixture was dispersed by adding 520g of water and then distillated to separate acetone off and obtain the aqueous polyurethane urea dispersion 3 having a solid component content of 39 wt% and a viscosity of 13.7 seconds.

### Aqueous polyurethane urea dispersion 4 (viscosity 18.1s)

It was synthesized according to Example 10 of the patent application CN102803327A. 393g of PTHF2000, 84.4g of PTHF1000 and 10.0g of LB25 were dehydrated at 110°C under 15 mbar for 1 hour and then the mixture was cooled. 53.3g of Desmodur^{®} H and 70.4g of Desmodur^{®} I were added at 60°C, and the mixture was stirred at 80°C-90°C until the isocyanate content reached 4.8%. The mixture was then dissolved in 1000g of acetone and cooled to 50°C to obtain a reaction solution. A solution of 13.9g of AAS, 26.2g of IPDA and 5.6g of EDA in 250g of water was added to the reaction solution and the mixture was vigorously agitated for 15 minutes. The mixture was dispersed by adding 130g of water and then distillated to separate acetone off and obtain the aqueous polyurethane urea dispersion 4 having a solid component content of 62 wt% and a viscosity that is too high to be measured. Then water was added to dilute the aqueous polyurethane polyurea dispersion 4 to a solid component content of 30 wt% with a viscosity of 18.1 seconds.

### Aqueous polyurethane urea dispersion 5 (the system for preparing the aqueous polyurethane urea dispersion is free of hexamethylene diisocyanate)

312.3g of polyester I and 39.6g of LB25 were dehydrated at 110°C under 15 mbar for 1 hour and then 2.7g of 2,2-dimethylolpropionic acid was added. The mixture was cooled while stirring. 118.7g of Desmodur^{®} I was added at 60°C, and the mixture was stirred at 80°C-90°C until the isocyanate content reached 5.7%. The mixture was then dissolved in 770g of acetone and cooled to 50°C to obtain a reaction solution. 2.0g of TEA was added to the reaction solution and the mixture was stirred for 5 minutes. Then a solution of 23.0g of IPDA and 3.6g of EDA in 79.5g of water was added and the mixture was vigorously agitated for 30 minutes. The mixture was dispersed by adding 420g of water and then distillated to separate acetone off and obtain the aqueous polyurethane urea dispersion 5 having a solid component content of 50 wt% and a viscosity of 17.0 seconds.

### Aqueous polyurethane urea dispersion 6 (viscosity 23.1s)

275.6g of Desmophen^{®} C1200 and 5.1g of LB25 were dehydrated at 110°C under 15 mbar for 1 hour and then 17.1g of 2,2-dimethylolpropionic acid was added. The mixture was cooled while stirring. 75.1g of Desmodur^{®} H and 8.3g of Desmodur^{®} I were added at 60°C, and the mixture was stirred at 80°C-90°C until the isocyanate content reached 4.8%. The mixture was then dissolved in 625g of acetone and cooled to 50°C to obtain a reaction solution. 11.6g of TEA was added to the reaction solution and the mixture was stirred for 5 minutes. Then a solution of 2.8g of IPDA, 2.4g of EDA and 13.0g of BA in 54.5g of water was added and the mixture was vigorously agitated for 30 minutes. The mixture was dispersed by adding 908g of water and then distillated to separate acetone off and obtain the aqueous polyurethane urea dispersion 6 having a solid component content of 31 wt% and a viscosity of 23.1 seconds.

### Aqueous polyurethane urea dispersion 7 (the system for preparing the aqueous polyurethane urea dispersion is free of monofunctional nonionic hydrophilic compound)

312.3g of polyester I was dehydrated at 110°C under 15 mbar for 1 hour and then 13.1g of 2,2-dimethylolpropionic acid was added. The mixture was cooled while stirring. 49.3g of Desmodur^{®} H and 65.1g of Desmodur^{®} I were added at 60°C, and the mixture was stirred at 80°C-90°C until the isocyanate content reached 5.8%. The mixture was then dissolved in 718g of acetone and cooled to 50°C to obtain a reaction solution. 9.9g of TEA was added to the reaction solution and the mixture was stirred for 5 minutes. Then a solution of 14.7g of IPDA and 7.2g of EDA in 65.6g of water was added to that reaction solution and the mixture was vigorously agitated for 30 minutes. The mixture was dispersed by adding 810g of water and then distillated to separate acetone off and obtain the aqueous polyurethane urea dispersion 7 having a solid component content of 35 wt% and a viscosity of 17.4 seconds.

### Aqueous polyurethane urea dispersion 8 (the system for preparing the aqueous polyurethane urea dispersion is free of potentially anionic or anionic hydrophilic compound)

310.0g of polyester II and 29.7g of LB25 were dehydrated at 110°C under 15 mbar for 1 hour and then the mixture was cooled. 24.6g of Desmodur^{®} H and 32.5g of Desmodur^{®} I were added at 60°C, and the mixture was stirred at 80°C-90°C until the isocyanate content reached 3.1%. The mixture was then dissolved in 650g of acetone and cooled to 50°C to obtain a reaction solution. A solution of 9.6g of IPDA and 2.7g of EDA in 37.0g of water was added to the reaction solution and the mixture was vigorously agitated for 30 minutes. The mixture was dispersed by adding 577g of water and then distillated to separate acetone off and obtain the aqueous polyurethane urea dispersion 8 having a solid component content of 39 wt% and a viscosity of 13.9 seconds.

### Aqueous polyurethane urea dispersion 9 (the system for preparing the aqueous polyurethane urea dispersion contains a high content of a monofunctional nonionic hydrophilic compound)

206.7g of polyester I and 35.6g of LB25 were dehydrated at 110°C under 15 mbar for 1 hour, and then the mixture was cooled. Then 6.4g of 2,2-dimethylolpropionic acid was added, and the mixture was cooled while stirring. 27.4g of Desmodur^{®} H and 36.2g of Desmodur^{®} I were added at 60°C, and the mixture was stirred at 80°C-90°C until the isocyanate content reached 4.8%. The mixture was then dissolved in 510g of acetone and cooled to 50°C to obtain a reaction solution. Then a solution of 9.0g of IPDA and 3.1g of EDA in 35.6g of water was added and the mixture was vigorously agitated for 30 minutes. The mixture was dispersed by adding 290g of water and then distillated to separate acetone off. In the distillation process, the demulsification occurred, and no aqueous polyurethane urea dispersion was available.

### Aqueous polyurethane urea dispersion 10 (the system for preparing the aqueous polyurethane urea dispersion contains a high content of a potentially anionic or anionic hydrophilic compound)

156.1g of polyester I and 10.9g of LB25 were dehydrated at 110°C under 15 mbar for 1 hour and then the mixture was cooled. 13.7g of Desmodur^{®} H and 18g of Desmodur^{®} I were added at 60°C, and the mixture was stirred at 80°C-90°C until the isocyanate content reached 2.9%. The mixture was then dissolved in 324g of acetone and cooled to 50°C to obtain a reaction solution. Then a solution of 23.2g of AAS in 20.0g of water was added and the mixture was vigorously agitated for 30 minutes. The mixture was dispersed by adding 450g of water. In the dispersing process, the polymer gelled and no aqueous polyurethane urea dispersion was available.

### Examples 1-3 and Comparative Examples 1-5

According to the component and the amount shown in Table 1, the organic solvent was added to the aqueous polyurethane urea dispersion and the mixture was dispersed with a mechanic dispersion machine at a rotation speed of 500 rpm - 1000 rpm for 5 minutes to obtain the formula. The content of the aqueous polyurethane urea dispersions of the formulae in Table 1 comprised 95 wt% or higher of the total weight of the formulae, the viscosities of the aqueous polyurethane urea dispersions were nearly identical to the initial viscosities of the formulae, therefore the initial viscosity of the formula was replaced with the viscosity of the aqueous polyurethane urea dispersion. After the formula was stored respectively at room temperature for 1 hours, at room temperature for 1 day and in a 40°C oven for 3 days, the viscosity of the formula was tested with an Anest Iwata NK-2 cup (NK-2#cup) according to Standard JIS K 5600-2-2-1999-02 and the viscosity change value was calculated. When the viscosity change value is greater than 25%, the storage stability of the formula is poor and it is difficult to use. Meanwhile, it is observed whether there is any change in the appearance of the formula, for example, whether there is any precipitation or gelatination; if present, the precipitation or the gelatination will also affect the use of the formula. When the viscosity change value of the formula is greater than 25% or there appears the precipitation or gelatination in the formula, the viscosity test of the formula with a longer storage time will not be performed.

### Example 4

1) Preparation of colour paste: To a dispersion tank was added deionized water, and then under the condition of being dispersed with stirring blades respectively and successively added 0.5g of a 10% aqueous DMEA solution (DMEA was diluted with water to a 10% aqueous solution), 3.2g of BYK190, 1g of EnviroGem AD 01 and 1.7g of Surfinol 104 BC. The mixture was dispersed for 5 minutes, then 15.9g of R-706, 5.5g of Talc, and 0.10g of Carbone Black FW 200 were added, and 0.1g of Rm-8W was added for thickening, then the mixture was pre-dispersed for 10 min. - 15 min. by stirring at the rotation speed of 500-1000 rpm, and then mixed with glass beads (1:1) and shaked for 120 minutes to finally produce a grey colour paste having the fineness of <20 µm.
2) To the dispersion tank was added 58.7g of the aqueous polyurethane urea dispersion 3, and then were successively added 35.5g of the colour paste, 1.0g of a 10% aqueous DMEA solution (DMEA was diluted with water to a 10% aqueous solution), 4.0g of 2-EHA and 0.8g of Primal ASE 60, and the mixture was dispersed for 20 minutes by stirring at the rotation speed of 500-1000 rpm to produce a grey paint.

### Example 5

1) Preparation of aluminum slurry: 6.0g of Hydrolan 2154 and 5.0g of ethylene glycol butyl ether (BG) were mixed, then 0.1g of BYK192 was added, and the mixture was uniformly stirred.
2) To a dispersion tank were respectively added 3.57g of Bayhydrol UH 2648/1 and 28.15g of the aqueous polyurethane urea dispersion 3, and successively added, under the condition of being dispersed with stirring, 1.0g of Cytec 325, 10g of deionized water, 0.5g of an 10% aqueous DMEA solution (DMEA was diluted with water to a 10% aqueous solution), 0.3g of BYK 028, and 0.3g of BYK 348. The mixture was dispersed for 2 minutes, and 10g of an 3% aqueous RD solution (RD was dispersed into water to product a 3% aqueous RD solution) and 3.0g of AQUATIX 8421 were added. Then 10g of water was added to adjust the viscosity. The mixture was uniformly dispersed, and then 0.5g of a 10% aqueous DMEA solution (DMEA was diluted with water to a 10% aqueous solution) was added. The mixture was dispersed for 5 minutes, and then 11.1g of the above prepared aluminum slurry was added. Then 11.18g of deionized water and 0.4g of Rheolate 299 were added. The mixture was dispersed for 20 minutes at the rotation speed of 1000 rpm to produce an aluminum paint, and finally 10g of deionized water was added to adjust the paint to a sprayable viscosity.

The paints of Example 4 and Example 5 were tested with Ford 4# Cup according to Standard ASTM D1200-2010 for the viscosity immediately after the preparation was finished (recorded as the initial viscosity) and the viscosity after stored in a 40°C oven for 10 days, and the viscosity change value was calculated and listed in Table 2. When the viscosity change value was greater than 25%, the storage stability of the formula was poor and it was difficult to use. Viscosity change value = (viscosity after storage of the paint/initial viscosity of the paint - 1) ^{∗} 100%.

Table 1 showed the components and the contents of the formulae of Examples 1-3 and Comparative Examples 1-6, as well as the viscosities after the formulae were stored at room temperature for 1 hour and for 1 days and stored in a 40°C oven for 3 days, and the viscosity change values. Table 2 showed the viscosity test results of the paints of Examples 4-5.

**Table 1: Compositions and viscosities of the formulae of Examples and Comparative Examples**

| Example/Comparative Example | Aqueous polyurethane urea dispersion | | Organic solvent | | Formula stored at room temperature for 1 hour | | Formula stored at room temperature for 1 day | | Formula stored in a 40°C oven for 3 days | |
|---|---|---|---|---|---|---|---|---|---|---|
| | Component | Weight/g | Component | Weight/g | Viscosity/s | Viscosity change value/% | Viscosity/s | Viscosity change value/% | Viscosity/s | Viscosity change value/% |
| Example 1 | PUD1 | 80 | BDG | 4 | 8.3 | -1 | 8.6 | 2 | 8.7 | 4 |
| | PUD 1 | 80 | 2-EHA | 4 | 8.1 | -3 | 8.2 | -2 | 8.3 | -1 |
| | PUD 1 | 80 | BG | 4 | 8.4 | 0 | 8.5 | 1 | 8.6 | 2 |
| | PUD 1 | 80 | DPnB | 4 | 8.1 | -4 | 8.2 | -2 | 8.2 | -2 |
| Example 2 | PUD 2 | 80 | BDG | 4 | 10.3 | -1 | 10.2 | -2 | 10.1 | -3 |
| | PUD 2 | 80 | 2-EHA | 4 | 10.8 | 4 | 11.0 | 6 | 10.7 | 3 |
| | PUD 2 | 80 | BG | 4 | 10.3 | -1 | 10.6 | 2 | 10.6 | 2 |
| | PUD 2 | 80 | DPnB | 4 | 10.8 | 4 | 11.1 | 7 | 10.8 | 4 |
| Example 3 | PUD 3 | 80 | BDG | 4 | 15.2 | 10 | 15.6 | 13 | 15.3 | 11 |
| | PUD 3 | 80 | 2-EHA | 4 | 16.2 | 18 | 16.7 | 21 | 16.8 | 22 |
| | PUD 3 | 80 | BG | 4 | 15.5 | 13 | 16.0 | 16 | 15.2 | 10 |
| | PUD 3 | 80 | DPnB | 4 | 15.7 | 14 | 16.4 | 20 | 15.9 | 16 |
| Comparative Example 1 | PUD 4 | 80 | BDG | 4 | 22.7 | 26 | | | | |
| | PUD 4 | 80 | 2-EHA | 4 | 27.1 | 50 | | | | |
| | PUD 4 | 80 | BG | 4 | 25.3 | 40 | | | | |
| | PUD 4 | 80 | DPnB | 4 | 26.5 | 46 | | | | |
| Comparative Example 2 | PUD 5 | 80 | BDG | 4 | 22.3 | 31 | | | | |
| | PUD 5 | 80 | 2-EHA | 4 | 33.7 | 98 | | | | |
| | PUD 5 | 80 | BG | 4 | 22.5 | 32 | | | | |
| | PUD 5 | 80 | DPnB | 4 | 33.6 | 98 | | | | |
| Comparative Example 3 | PUD 6 | 80 | BDG | 4 | 21.2 | -8 | 21.0 | -9 | 21.0 | -9 |
| | PUD 6 | 80 | 2-EHA | 4 | Viscosity is too high to be tested | | | | | |
| | PUD 6 | 80 | BG | 4 | 28.5 | 23 | | | | |
| | PUD 6 | 80 | DPnB | 4 | 45.2 | 96 | | | | |
| Comparative Example 4 | PUD 7 | 80 | BDG | 4 | 23.4 | 34 | | | | |
| | PUD 7 | 80 | 2-EHA | 4 | 48.7 | 180 | | | | |
| | PUD 7 | 80 | BG | 4 | 32.1 | 84 | | | | |
| | PUD 7 | 80 | DPnB | 4 | 39.3 | 126 | | | | |
| Comparative Example 5 | PUD 8 | 80 | BDG | 4 | Precipitation appeared | | | | | |
| | PUD 8 | 80 | 2-EHA | 4 | 14.6 | 5 | | | | |
| | PUD 8 | 80 | BG | 4 | 12.9 | -7 | | | | |
| | PUD 8 | 80 | DPnB | 4 | Precipitation appeared | | | | | |

| | | | | | | | | | | |
|---|---|---|---|---|---|---|---|---|---|---|
| Note: Viscosity change value = (viscosity after storage of the formula/initial viscosity of the formula - 1) ^{∗} 100%, because the content of the aqueous polyurethane urea dispersions of the formulae in Table 1 comprised 95 wt% or higher of the total weight of the formulae, the viscosities of the aqueous polyurethane urea dispersions were nearly identical to the initial viscosities of the formulae, therefore the initial viscosity of the formula in the above equation was replaced with the viscosity of the aqueous polyurethane urea dispersion. | | | | | | | | | | |

It could be seen from Table 1 that the formulae formed by compounding the aqueous polyurethane urea dispersions of Examples 1-3 with various organic solvents had small viscosity change values (all less than 25%) during storage and no significant change in appearance, and therefore had good storage stability, that is to say, the aqueous polyurethane urea dispersions in the formulae of Examples 1-3 had good compatibility with various solvents and high flexibility in the formula compounding.

The formulae formed by compounding the aqueous polyurethane urea dispersions of Comparative Examples 1-2 and Comparative Example 4 with various organic solvents had large viscosity change values during storage, the viscosity change values after stored at room temperature for 1 hour were all greater than 25%, that is to say, the storage stability of the formula was poor, which was not favorable for practical use, and the selection of the solvent for the aqueous polyurethane urea dispersion in the formula was critical.

The formulae formed by compounding the aqueous polyurethane urea dispersions of Comparative Example 3 with some organic solvents had large viscosity change values during storage, the viscosity change values after stored at room temperature for 1 hour were greater than 25%, that is to say, the storage stability of the formulae was poor, which was not favorable for practical use, and the selection of the solvent for the aqueous polyurethane urea dispersion in the formula was critical.

When the aqueous polyurethane urea dispersion of Comparative Example 5 was compounded with some organic solvents, the formed formulae produced precipitation, which affected the use.

**Table 2: Test results for the viscosities of paints of Examples 4-5**

| | Grey colour paint of Example 4 | Aluminum paint of Example 5 |
|---|---|---|
| Initial viscosity/s | 30 | 49 |
| Viscosity of paint after stored in a 40°C oven for 10 days/s | 28 | 46 |
| Viscosity change value/% | -7 | -6 |

It could be seen from Table 2 that the paints of Example 4 and Example 5 had small viscosity change values after stored in a 40°C oven for 10 days, both less than 25%, and the paints had good storage stability.

It will be evident to those skilled in the art that the invention is not limited to the details set forth, and that the present invention may be embodied in other specific forms without departing from the spirit or essential characteristics thereof. The present embodiments are therefore to be considered in all respects as illustrative and not limiting, and thereby the scope of the present invention is indicated by the appended claims rather than by the foregoing description; and moreover any changes, as long as it falls within the meaning and range of the equivalence to the claims, should be considered as a part of the present invention.

## Claims

1. An aqueous polyurethane urea dispersion containing a polyurethane urea, wherein said polyurethane urea is obtained by the reaction of a system comprising the following components:
a. At least one mixture of isocyanates, comprising hexamethylene diisocyanate and isophorone diisocyanate;
b. At least one polymer polyol;
c. 0.5 wt% - 10 wt% of a monofunctional nonionic hydrophilic compound, relative to the total weight of said polyurethane urea, comprising a compound having an isocyanate group-reactive group and at least one hydrophilic polyether chain; and
d. 0.5 wt% - 5 wt% of a potentially anionic or anionic hydrophilic compound, relative to the total weight of said polyurethane urea, comprising a carboxylate salt and/or a sulfonate salt;
said aqueous polyurethane urea dispersion has a viscosity of 5s - 18s, tested with an Anest Iwata NK-2 cup according to Standard JIS K 5600-2-2-1999-02; the amount of said polyurethane urea is 30 wt% - 50 wt%, relative to the total weight of said aqueous polyurethane urea dispersion.

2. The aqueous polyurethane urea dispersion according to claim 1, which is **characterized in that** said aqueous polyurethane urea dispersion has a viscosity of 8s - 14s, tested with an Anest Iwata NK-2 cup according to Standard JIS K 5600-2-2-1999-02.

3. The aqueous polyurethane urea dispersion according to claim 1 or 2, which is **characterized in that** said system has a mole ratio of the isocyanate group to the hydroxy group of 1.3 - 3.0, most preferably 1.7 - 2.8.

4. The aqueous polyurethane urea dispersion according to any of claims 1-3, which is **characterized in that** the molar ratio of hexamethylene diisocyanate to isophorone diisocyanate is 0.1:1 - 11:1, most preferably 0.2:1 - 9:1.

5. The aqueous polyurethane urea dispersion according to any of claims 1-4, which is **characterized in that** the amount of the mixture of isocyanates as the component a) is 10 wt% - 70 wt%, most preferably 10 wt% - 25 wt%, relative to the total weight of said polyurethane urea.

6. The aqueous polyurethane urea dispersion according to any of claims 1-5, which is **characterized in that** the amount of the monofunctional nonionic hydrophilic compound as said component c) is 1 wt% - 9 wt%, relative to the total weight of said polyurethane urea.

7. The aqueous polyurethane urea dispersion according to any of claims 1-6, which is **characterized in that** the monofunctional nonionic hydrophilic compound as said component c) is one or more of the following: polyethylene oxide monoalkyl ether and polyethylene oxide polypropylene oxide copolymer monoalkyl ether; most preferably one or more of the following: polyethylene oxide monomethyl ether and polyethylene oxide polypropylene oxide copolymer monomethyl ether.

8. The aqueous polyurethane urea dispersion according to any of claims 1-7, which is **characterized in that** the amount of the potentially anionic or anionic hydrophilic compound as said component d) is 0.5 wt% - 4.5 wt%, relative to the total weight of said polyurethane urea.

9. The aqueous polyurethane urea dispersion according to any of claims 1-8, which is **characterized in that** the potentially anionic or anionic hydrophilic compound as said component d) is one or more of the following: 2,2-dimethylolpropionic acid, 2,2-dimethylolpropionate, 2,2-dimethylolbutyric acid, 2,2-dimethylolbutyrate, sulfamic acid, sulfamate, aminocarboxylic acid and aminocarboxylate.

10. The aqueous polyurethane urea dispersion according to any of claims 1-9, which is **characterized in that** said system further contains component e) an isocyanate group-reactive compound other than component b) - component d), which has a molecular weight of 50 g/mol - 400 g/mol.

11. The aqueous polyurethane urea dispersion according to claim 10, which is **characterized in that** the isocyanate group-reactive compound as said component e) is one or more of the following:
an alcohol compound having the functionality of 1-2 and a hydroxy-free amine compound having the functionality of 1-2.

12. The aqueous polyurethane urea dispersion according to any of claims 1-11, which is **characterized in that** said polyurethane urea at least meets one of the following characteristics:
A. Relative to the total weight of said polyurethane urea, the content of the urea group in the polyurethane urea is greater than 0.8 eq/kg;
B. Relative to the total weight of said polyurethane urea, the content of the soft segment in the polyurethane urea is less than 80%;
C. The melting enthalpy in the range of 20°C-100°C of the first temperature-rise curve measured by DSC according to DIN65467 is less than 3 J/g; and
D. The weight-average molecular weight is less than 150000.

13. A process for preparing the aqueous polyurethane urea dispersion according to any of claims 1-12, comprising the following steps:
i. reacting some or all of component a) a mixture of isocyanates, component b) a polymer polyol, component c) a monofunctional nonionic hydrophilic compound and component d) a potentially anionic or anionic hydrophilic compound to obtain a prepolymer;
ii. reacting said prepolymer and the mixture of isocyanates, the polymer polyol, the monofunctional nonionic hydrophilic compound and the potentially anionic or anionic hydrophilic compound that are not added in said step i to obtain said polyurethane urea; and
iii. introducing water before, during or after step ii to obtain said aqueous polyurethane urea dispersion.

14. A coating, adhesive or sealant containing the aqueous polyurethane urea dispersion according to any of claims 1-12.

15. The coating, adhesive or sealant according to claim 14, which is **characterized in** further containing an organic solvent, said organic solvent is one or more of the following: an alcohol compound, an ether compound, a ketone compound, an ester compound and a hydrocarbon compound.

16. Use of the aqueous polyurethane urea dispersion according to any of claims 1-12 in preparing a coated product or an adhered product.

17. An article or manufactured product comprising a substrate prepared from, coated with, bonded with or sealed with the aqueous polyurethane urea dispersion according to any of claims 1-12.

18. A coating process, comprising the following steps: applying the aqueous polyurethane urea dispersion according to any of claims 1-12 to a surface of a substrate, and then curing.

19. A coated product, comprising a substrate and a coating layer formed by applying the aqueous polyurethane urea dispersion according to any of claims 1-12 to said substrate.

20. An adhering process, comprising the following steps:
I. Applying the aqueous polyurethane urea dispersion according to any of claims 1-12 to at least one surface of a substrate; and
II. Contacting the surface of the substrate treated in step I with a surface of the substrate itself or an additional base.

21. An adhered product obtained by manufacturing according to the adhering process of claim 20.
